# EUROPEAN PATENT APPLICATION

(11) **EP 4 231 716 A1**
(43) Date of publication of application: **23.08.2023**
(21) Application number: 23155849.5
(22) Date of filing: 09.02.2023
(51) Int. Cl.: H04W 48/14, H04W 8/18, H04W 84/12

(54) **ACCESS NETWORK DISCOVERY AND SELECTION**

(30) Priority: 18.02.2022 IN 202211008581
(71) Applicant: Sterlite Technologies Limited, Haryana 122002 (IN)
(72) Inventor: Patel, Ajay, 122002 Gurugram (IN); Parmar, Viratsinh Gambhirsinh, 122002 Gurugram (IN); Desai, Amol, 122002 Gurugram (IN); Makwana, Alpesh, 122002 Gurugram (IN); Vamja, Ankita, 122002 Gurugram (IN)
(74) Representative: Petraz, Gilberto Luigi

(57) **Abstract**

The present disclosure provides a method for intelligently latching portable UEs having a Wi-Fi client to SSIDs associated with BSSIDs. The method comprises sending instructions to the portable UEs to automatically enable Wi-Fi on portable UEs when Wi-Fi is disabled on the portable UEs and when the portable UE associated with Wi-Fi client is pre-authenticated with the SSIDs associated with the BSSIDs associated with access points, thereby enabling latching of the portable UEs to the SSIDs and scanning for available SSIDs even when Wi-Fi is disabled on the portable UEs associated with the Wi-Fi client.

## Description

### TECHNICAL FIELD

Embodiments of the present disclosure relate to the field of wireless communication networks and more particularly, and not by way of any limitation, the present patent application is directed to a scheme for network discovery and selection by a user equipment (UE) device.

This application claims the benefit of Indian Application No. 202211008581 titled "ACCESS NETWORK DISCOVERY AND SELECTION" filed by the applicant on February 18th, 2022, which is incorporated herein by reference in its entirety.

### BACKGROUND ART

Wireless access networks have become a key element of a variety of telecommunications network environments. As to enterprise networks, they provide convenient access to network resources for workers carrying portable computers and mobile handheld devices, and for guests or temporary workers similarly equipped. They also provide a cost-effective alternative to relocating physical Ethernet jacks in environments where facilities are moved or changed frequently. In addition, wireless access points operable with diverse communication/computing devices are becoming ubiquitous in public environments such as, e.g., hotels, airports, restaurants, and coffee shops. With the increase in high-speed Internet access, the use of access point(s) in the users' homes is also envisioned and has started for other applications.

US Patent application "US10306507B2" discloses a wireless communication traffic can be offloaded from a user equipment (UE) to two wireless points of access. The user equipment (UE) is connected to a radio access network (RAN) using a radio access technology (RAT) such as long-term evolution (LTE) network and can determine which network capabilities are available for traffic offloading and adapt to the capabilities presented. Further, the UE can determine whether the network supports three different configurations and configure traffic offloading to operate within the network conditions: (1) RAN rules without access network detection and selection function (ANDSF), (2) ANDSF in conjunction with RAN rules or (3) enhanced ANDSF with RAN assistance.

Another US Patent application "US20140341076A1" discloses an access network selection mechanism which presumes that one access network is selected for the communication of the mobile device by either the network or the mobile device itself and that a handover to the selected access network is executed to obtain a dynamic best connection according to the momentary characteristics of the access network and to the momentary requirements of the mobile device. Complementing the selection, an Access Network Discovery Mechanism (ANDM) is required which determines the access networks located in the vicinity of the mobile device, thus available to be selected and gives policies to control the selection mechanism.

Yet another Patent application "US20150163716A1", discloses a system for traffic management between a Wi-Fi network and an LTE network is disclosed that includes a network interface assignment module for determining from an operator side of the Wi-Fi network and the LTE network a set of Wi-Fi Access Points (APs) and LTE base stations for each user that provides a least a highest quality of experience for each of the users using input strength for all users to potential Wi-Fi access points and LTE base stations. The system may further include an interface switching service (ISS) module that includes a control logic and a network HTTP proxy for delivering network switching instructions to devices of users. The control logic receives instructions from the NIA module and sends signals to the devices of the users to switch from WIFI and LTE networks through the LTE network based upon signal strength of the users.

In yet another prior art reference "US8787309B1", AP's associated with a communication network and any wireless devices desiring contact, operated according to a protocol in which each wireless device selects AP's with which to communicate. A system coordinator causes the AP's to operate so as to guide each wireless device to an AP selected by the system coordinator. This has the effect that, notwithstanding that the protocol involves having the wireless device make the selection of AP, functionally, the AP's make the selection for it. In a 1st technique, multiple AP's share an identifier, with the system coordinator directing one particular AP to respond to the wireless device, thus appearing to wireless devices as a "personal cell". In a 2nd technique, AP's each maintain identifiers substantially unique to each wireless device, with the system coordinator directing only one particular AP to maintain any particular wireless device's identifier, thus appearing to wireless devices as a "personal AP".

However, Wi-Fi and cellular interoperability is still the biggest challenge for network operators. Smooth and seamless roaming between non-3GPP to 3GPP networks is available, but network operators are looking for effective ways to combine available standards to make a reliable wireless network. Although, the prior arts cover various techniques for Wi-Fi and cellular interoperability. But, the biggest challenge still remains to find a way to assist a mobile node to intelligently determine and select the most preferable Point of Service, anytime, anywhere so that users can get the best access network for different individual data services. Also, the network operators need to be able to direct traffic among access networks intelligently to prevent congestion and optimize wireless resources.

In light of the above-stated discussion, there is an urgent need for a technical solution that overcomes the above-stated limitations in the access network discovery. The present disclosure focuses on providing a Wi-Fi client and a method for access network discovery and selection thereof without any no human intervention is required.

### SUMMARY OF THE DISCLOSURE

Embodiments of the present disclosure provide a method of intelligently latching one or more portable UEs (User Equipments) having a Wi-Fi client to one or more SSIDs (Service Set Identifiers) associated with one or more BSSIDs (Basic Service Set Identifiers). The method comprising steps of sending instructions, by the Wi-Fi client to the one or more portable UEs to automatically enable Wi-Fi on the one or more portable UEs when Wi-Fi is disabled on the one or more portable UEs and when the portable UE associated with Wi-Fi client is pre-authenticated with the one or more SSIDs associated with the one or more BSSIDs associated with one or more access points, thereby enabling latching of the one or more portable UEs to the one or more SSIDs.

According to the first aspect of the present disclosure, the Wi-Fi client scans for available one or more SSIDs even when Wi-Fi is disabled on the one or more portable UEs associated with the Wi-Fi client.

According to the second aspect of the present disclosure, the Wi-Fi client identifies one or more pre-authenticated SSIDs of available one or more SSIDs based on an SSID-BSSID database. In particular, the one or more pre-authenticated SSIDs correspond to the one or more BSSIDs. Moreover, the SSID-BSSID database correlates the one or more pre-authenticated SSIDs for the one or more BSSIDs.

According to the third aspect of the present disclosure, the Wi-Fi client stores one or more pre-authenticated SSIDs corresponding to the one or more BSSIDs in an SSID-BSSID database. In particular, the one or more SSIDs are associated with the one or more BSSIDs for the one or more portable UEs. The one or more portable UEs are associated with a first access point in a wireless network using a uniquely assigned BSSID among a plurality of stored uniquely assigned BSSIDs assigned to a plurality of UEs.

According to another embodiment of the present disclosure, the Wi-Fi client associated with one or more SSIDs (Service Set Identifiers) comprises a controller to control embedded features present in the Wi-Fi client and assist in connecting one or more portable UEs (User Equipments) with an operator's broadband services or any other Wi-Fi broadband services and a transmitter instructively coupled with the controller. In particular, the transmitter is configured to send instructions to the one or more portable UEs to automatically enable Wi-Fi on the one or more portable UEs when Wi-Fi is disabled on the one or more portable UEs and when the portable UE associated with Wi-Fi client is pre-authenticated with the one or more SSIDs, thereby enabling latching of the one or more portable UEs to the one or more SSIDs.

According to the fourth aspect of the present disclosure, the scanner is configured to scan for available one or more SSIDs even when Wi-Fi is disabled on the one or more portable UEs associated with the Wi-Fi client.

According to the fifth aspect of the present disclosure, the controller comprises an authenticator. Particularly, the authenticator identifies one or more pre-authenticated SSIDs of available one or more SSIDs based on an SSID-BSSID database. Further, the one or more pre-authenticated SSIDs correspond to the one or more BSSIDs. The SSID-BSSID database correlates the one or more pre-authenticated SSIDs for the one or more BSSIDs.

According to the sixth aspect of the present disclosure, the Wi-Fi client further comprises a memory configured to store one or more pre-authenticated SSIDs corresponding to the one or more BSSIDs in an SSID-BSSID database.

According to the seventh aspect of the present disclosure, the Wi-Fi client contains data management and control functions necessary to provide network discovery and selection assistance. The Wi-Fi client responds to the one or more portable UEs' requests for access network discovery information. Moreover, the Wi-Fi client is able to initiate offload and facilitate data transfer to the one or more portable UEs based on network triggers or because of previous communication with the one or more portable UEs. The Wi-Fi client comprises a list of SSIDs that are available in a vicinity of the one or more portable UEs, wherein information related to the list of SSIDs is received in response to a request made by the one or more portable UEs, which contains their location and capability like types of supported interfaces.

According to an eight aspect of the present disclosure, the WiFi client assist a mobile node to intelligently determine and select most preferable Point of Service, anytime, anywhere so that users can get the best access network for different individual data services, wherein a UE (user equipment) associated with the Wi-Fi client is latched to an SSID (Service Set Identifier) and a BSSID (Basic Service Set Identifier) associated with a Wi-Fi AP (access point) to facilitate network operators to direct traffic among access networks intelligently to prevent congestion and optimize wireless resources.

The foregoing solutions of the present disclosure are attained by providing an access network discovery selection method. These and other aspects herein will be better appreciated and understood when considered in conjunction with the following description and the accompanying drawings. It should be understood, however, that the following descriptions are given by way of illustration and not of limitation. Many changes and modifications may be made within the scope of the invention herein without departing from the spirit thereof.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
Fig. 1 is a block diagram illustrating a Wi-Fi client for access network discovery and selection in accordance with one embodiment of the present disclosure;
Fig. 2 is a block diagram illustrating a Wi-Fi client for access network discovery and selection in accordance with another embodiment of the present disclosure;
Fig. 3 is a flowchart illustrating a method for access network discovery and selection in accordance with an embodiment of the present disclosure;
Fig. 4 is a flowchart illustrating a method for access network discovery and selection in accordance with another embodiment of the present disclosure; and
Fig. 5 is a flowchart illustrating a method for access network discovery and selection in accordance with yet another embodiment of the present disclosure.

### REFERENCE LIST

WiFi Client 100
Controller 102
Transmitter 104
Scanner 106
Authenticator 110
Memory 108

The Wi-Fi client for access network discovery and selection is illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

### Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

The term "including" is used to mean "including but not limited to". "Including" and "including but not limited to" are used interchangeably.

### The following brief definition of terms shall apply throughout the present invention:

ANDSF is an entity within EPC (evolved packet core) to assist user equipments (UEs) in the discovery/selection of the access networks, such as Wi-Fi, Wi-MAX, and LTE, in their vicinity, providing them with rules policing the connection to the networks. The ANDSF is used for access network selection and traffic steering between 3GPP access and WLAN (wireless local area network) access.

BSSID is a MAC (Medium Access Control) physical address of a wireless router or an access point the user is using to connect via Wi-Fi.

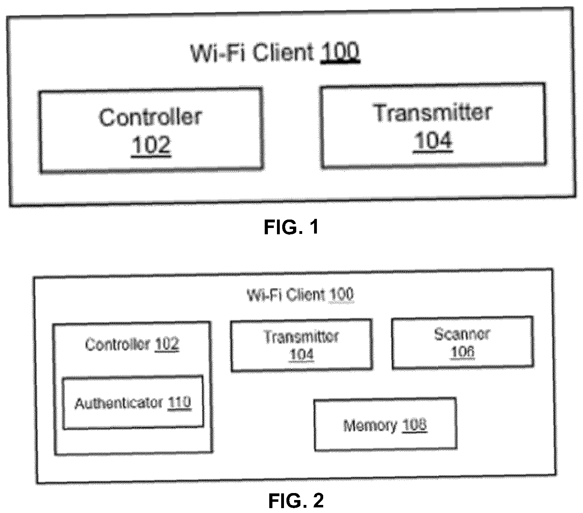

Fig. 1 and Fig. 2 are a block diagram illustrating a Wi-Fi client for access network discovery and selection in accordance with one or more embodiments of the present disclosure. The Wi-Fi client is an ANDSF (Access Network Discovery and Selection Function) client. Typically, the Wi-Fi client 100, runs on a UE, interacts with an ANDSF server using OMA-DM (Open Mobile Alliance Device Management) protocol over an S14 interface, which is an IP-based interface that supports 'pull' as well as 'push' mechanisms for communication. In particular, the Wi-Fi client 100 may be associated with an SSID (Service Set Identifier). The SSID is a name that identifies a wireless network. And, the UEs on a Wi-Fi network use the SSID for communications via the Wi-Fi network. Further, the UE may be, but not limited to, mobile phone, laptop, desktop, tablet.

The below features are embedded in the Wi-Fi client 100 and are especially useful for connecting the UEs with the operator's broadband services (Home Wi-Fi) or any other Wi-Fi (Any WIFI) broadband services. In particular, the Wi-Fi client 100 has any Wi-Fi / Home Wi-Fi (ONT) solution as an inbuilt feature, which helps in identifying if a network is a home network or any other personal Wi-Fi network and helps the Wi-Fi client 100 offload the UE to a desired network. Moreover, the Wi-Fi client 100 maximizes the use of the access networks through selective offload and traffic optimization using intelligent offload. Further, when a user installs the Wi-Fi client 100 for the first time, the Wi-Fi client 100 may fetch and store the information of the Wi-Fi networks that are pre-configured in the UE. In a single policy request, the Wi-Fi client 100 may get the policy for a default PLMN (Public land mobile network) as well as a Network PLMN, where PLMN is a mobile operator's cellular network in a specific country.

In accordance with an embodiment of the present disclosure, if any of the SSID, manually configured by the user, is in a range, then the Wi-Fi client 100 may latch on that SSID automatically in a real-time call-back. After latching on the SSID, the Wi-Fi client 100 may perform HTTP(s) Post (configured on validation server), which is only accessible from an operator network SSID (or any other URL freely accessible by the internet).

In accordance with one embodiment of the present disclosure, if the HTTP(s) Post is successful, then the Wi-Fi client 100 may consider the same SSID as a trusted SSID and mark it in a local database along with a corresponding BSSID. Once it is confirmed that SSID is from a trusted network, the Wi-Fi client 100 may start further Quality of experience (QoE) process and remain connected with the SSID.

In accordance with another embodiment of the present disclosure, if the HTTP(s) Post fails, then the Wi-Fi client 100 may mark that SSID along with BSSID as "Non-trusted SSID" and the Wi-Fi client 100 never tries to latch on to the same SSID again during the real-time call-back in the future. Further, the Wi-Fi client 100 may pass the SSID name for all access networks (Home Wi-Fi/ Any Wi-Fi) to the analytics server to help segregation of reports based on a policy Wi-Fi name.

If the user relates to any other preferred SSID, then there may not be intervention from the Wi-Fi client 100.

To perform the aforesaid functions, the Wi-Fi client 100 comprises a controller 102 and a transmitter 104. In particular, the controller 102 control embedded feature(s) present in the Wi-Fi client 100 and assist in connecting one or more portable UEs with an operator's broadband services (Home Wi-Fi) or any other Wi-Fi (Any Wi-Fi) broadband services by latching the one or more portable UEs to one or more SSIDs. Moreover, the controller 102 may control a series of processes so that the Wi-Fi client 100 can operate according to the present disclosure. Further, there may be a plurality of controllers that may perform a component control operation of the Wi-Fi client 100.

The transmitter 104 is instructively coupled with the controller 102 to send instructions to the one or more portable UEs to automatically enable Wi-Fi on the one or more portable UEs when Wi-Fi is disabled on the one or more portable UEs. And when the portable UE associated with Wi-Fi client 100 is pre-authenticated with the one or more SSIDs (Service Set Identifiers) associated with one or more BSSIDs (Basic Service Set Identifiers) associated with one or more Wi-Fi APs (access points), thereby enabling latching of the one or more portable UEs to the one or more SSIDs.

In accordance with an embodiment of the present disclosure, the one or more SSIDs may be associated with the one or more BSSIDs that are further associated with the one or more Wi-Fi APs and the Wi-Fi client 100. It includes associating the one or more portable UEs with a first access point in a wireless network using a uniquely assigned BSSID among a plurality of stored uniquely assigned BSSIDs assigned to a plurality of UEs.

In accordance with an embodiment of the present disclosure, the Wi-Fi client 100 may further comprise a scanner 106 configured to scan for available one or more SSIDs, associated with the one or more Wi-Fi APs, even when Wi-Fi is disabled on the one or more portable UEs associated with the Wi-Fi client 100 and a memory 108 configured to store one or more pre-authenticated SSIDs corresponding to the one or more BSSIDs in an SSID-BSSID database. In particular, the one or more pre-authenticated SSIDs correspond to the one or more BSSIDs, and the SSID-BSSID database correlates the one or more pre-authenticated SSIDs for the one or more BSSIDs. Further, the memory 108 consists of a list of access networks (SSIDs), such as Wi-Fi, that may be available in a vicinity of the one or more portable UEs.

The information related to the list of access networks may be received in response to a request made by the one or more portable UEs, which contains their location and capability, such as types of supported interfaces, for example. The received information may assist the one or more portable UEs to expedite the connection to the list of networks in the vicinity.

In accordance with an embodiment of the present disclosure, the memory 108 stores programs and data necessary for the operation disclosed in the present disclosure. Additionally, the memory 108 may store control information or data included in signals transmitted and received by the one or more portable UEs. Further, the memory 108 may be composed of a storage medium such as SD card and external storage devices, compact disc (CD), and digital versatile disc (DVD), or a combination of storage media.

In accordance with an embodiment of the present disclosure, the Wi-Fi client 100 may further comprise an authenticator 110 residing in the controller 102. Alternatively, the authenticator 110 may be a separate entity. In particular, the authenticator 110 may identify the one or more pre-authenticated SSIDs of the available one or more SSIDs based on the SSID-BSSID database.

Further, the Wi-Fi client 100 performs data management and control functions necessary to provide network discovery and selection assistance as per operators' policy and may respond to the one or more portable UEs' requests for access network discovery information, therefore termed as pull mode operation and may be able to initiate offload to facilitate data transfer to the one or more portable UEs (hence called as push mode operation), based on network triggers or because of previous communication with the one or more portable UEs.

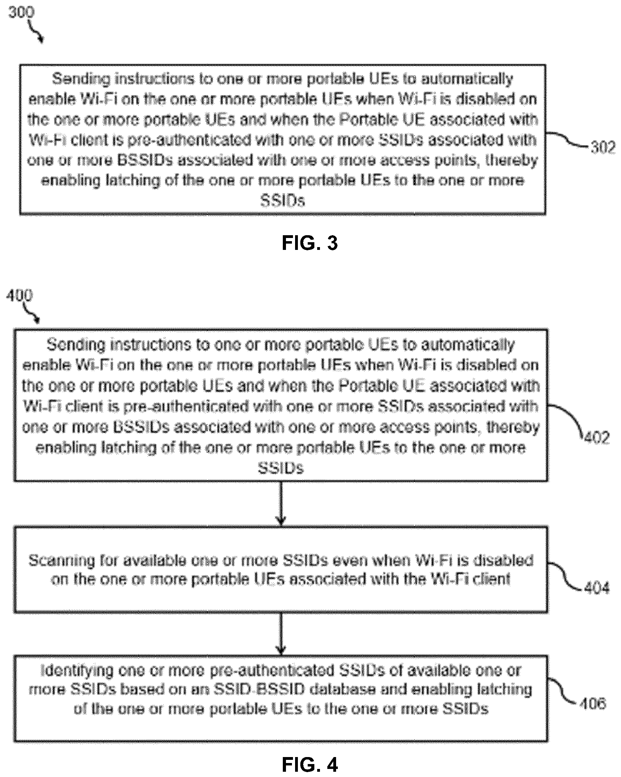

FIG. 3 is a flow-chart 300 depicting a method for access network discovery and selection in accordance with one embodiment of the present disclosure. It may be noted that in order to explain the flow-chart 300, references will be made to the elements explained in FIG. 1 and FIG. 2. The method for access network discovery and selection intelligently latches the one or more portable UEs associated with the Wi-Fi client 100 to the one or more SSIDs associated with the one or more BSSIDs of the one or more Wi-Fi APs, thus may be referred to as a method for intelligently latching the one or more portable UEs having the Wi-Fi client 100 to the one or more SSIDs associated with the one or more BSSIDs.

At step 302, the method includes sending instructions, by the Wi-Fi client 100, to the one or more portable UEs to automatically enable Wi-Fi on the one or more portable UEs when Wi-Fi is disabled on the one or more portable UEs and when the portable UE associated with Wi-Fi client 100 is pre-authenticated with the one or more SSIDs associated with the one or more BSSIDs associated with one or more access points, thereby enabling latching of the one or more portable UEs to the one or more SSIDs.

FIG. 4 is a flow-chart 400 depicting a method for access network discovery and selection in accordance with another embodiment of the present disclosure.

At step 402, Wi-Fi client 100 sends instructions to the one or more portable UEs to automatically enable Wi-Fi on the one or more portable UEs when Wi-Fi is disabled on the one or more portable UEs and when the portable UE associated with Wi-Fi client 100 is pre-authenticated with the one or more SSIDs associated with the one or more BSSIDs associated with one or more access points, thereby enabling latching of the one or more portable UEs to the one or more SSIDs.

At step 404, the Wi-Fi client 100 scans for available one or more SSIDs even when Wi-Fi is disabled on the one or more portable UEs associated with the Wi-Fi client 100.

At step 406 the Wi-Fi client 100 identifies the one or more pre-authenticated SSIDs of the available one or more SSIDs based on the SSID-BSSID database. In particular, the one or more pre-authenticated SSIDs correspond to the one or more BSSIDs and the SSID-BSSID database correlates the one or more pre-authenticated SSIDs for the one or more BSSIDs.

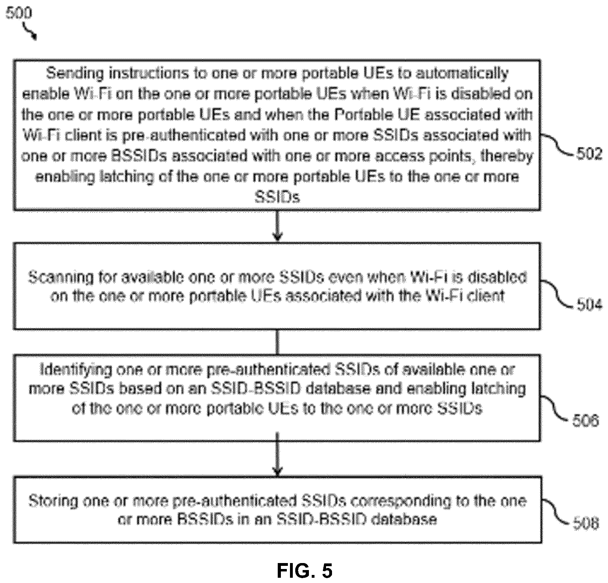

FIG. 5 is a flow-chart 500 depicting a method for access network discovery and selection in accordance with yet another embodiment of the present disclosure.

At step 502, the Wi-Fi client 100 includes sends instructions to the one or more portable UEs to automatically enable Wi-Fi on the one or more portable UEs when Wi-Fi is disabled on the one or more portable UEs and when the portable UE associated with Wi-Fi client 100 is pre-authenticated with the one or more SSIDs associated with the one or more BSSIDs associated with one or more access points, thereby enabling latching of the one or more portable UEs to the one or more SSIDs.

At step 504, the Wi-Fi client 100 scans for available one or more SSIDs even when Wi-Fi is disabled on the one or more portable UEs associated with the Wi-Fi client 100.

At step 506, the Wi-Fi client 100 identifies the one or more pre-authenticated SSIDs of the available one or more SSIDs based on the SSID-BSSID database. The one or more pre-authenticated SSIDs correspond to the one or more BSSIDs and the SSID-BSSID database correlates the one or more pre-authenticated SSIDs for the one or more BSSIDs.

At step 508, the Wi-Fi client 100 stores the one or more pre-authenticated SSIDs corresponding to the one or more BSSIDs in the SSID-BSSID database.

Advantageously, the aforementioned methods automatically offload on the operators as well as the user's personal Wi-Fi with better network experience, even when the user is not actively using the Wi-Fi client and enables automatic searching of nearby Wi-Fi and connecting the user on the Wi-Fi by measuring quality of Wi-Fi. Further, the present solution offloads the UEs to Wi-Fi SSID based on periodic and real-time evaluation of configured cell IDs in an ISMP (Inter-system mobility policy), hence facilitates faster offload on to the Any/Home Wi-Fi compared to the other traditional evaluation methods, which improves Wi-Fi offload rate and reduces network congestion, thereby improving user experience. Furthermore, the present disclosure leverages the potential of accessing operator's Home-Wi-Fi SSID or Any-Wi-Fi SSID as potential candidates, where the UEs can be offloaded, which is beneficial for providers of telecommunications services.

The present disclosure enables keeping a track of pre-configured networks, which makes the Wi-Fi client resilient. Further, the SSID and BSSID based identification provides accuracy, where SSID validation is based on the operators' requirement. The present disclosure supports and enables the operators with new standards like Access Network Discovery and Selection Function (ANDSF) that further enables operator managed offload and traffic steering by supporting devices (UEs) to intelligently discover access networks, like Wi-Fi, in nearby locality and dynamically select the preferred network and levy defined policies on the UEs, preferences, etc., thereby enhancing smooth Wi-Fi and cellular interworking.

It may be noted that the flow-charts 300, 400 and 500 are explained to have above stated process steps; however, those skilled in the art would appreciate that the flow-charts 300, 400 and 500 may have more/less number of process steps which may enable all the above stated implementations of the present disclosure.

Although FIG. 1 and FIG. 2 show various components of the Wi-Fi client 100, but it is to be understood that the present disclosure is not limited thereon. The Wi-Fi client 100 may include less or more components. Further, the labels or names of the components are used only for illustrative purposes and do not limit the scope of the present disclosure. One or more components can be combined together to perform the same or substantially similar function in the Wi-Fi client 100.

A person of ordinary skill in the art may be aware that, in combination with the examples described in the embodiments disclosed in this specification, units and algorithm steps may be implemented by electronic hardware, computer software, or a combination thereof.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

Disjunctive language such as the phrase "at least one of X, Y, Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

In a case that no conflict occurs, the embodiments in the present disclosure and the features in the embodiments may be mutually combined. The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. A method of intelligently latching one or more portable UEs (User Equipments) having a Wi-Fi client (100) to one or more SSIDs (Service Set Identifiers) associated with one or more BSSIDs (Basic Service Set Identifiers), **characterized in that**:
sending instructions, by the Wi-Fi client (100), to the one or more portable UEs to automatically enable Wi-Fi on the one or more portable UEs when Wi-Fi is disabled on the one or more portable UEs and when the portable UE associated with Wi-Fi client 100 is pre-authenticated with the one or more SSIDs associated with the one or more BSSIDs associated with one or more access points, thereby enabling latching of the one or more portable UEs to the one or more SSIDs.

2. The method as claimed in claim 1 further comprising:
scanning, by the Wi-Fi client (100), for available one or more SSIDs even when Wi-Fi is disabled on the one or more portable UEs associated with the Wi-Fi client (100).

3. The method as claimed in claim 1 further comprising:
identifying, by the Wi-Fi client (100), one or more pre-authenticated SSIDs of available one or more SSIDs based on an SSID-BSSID database, wherein the one or more pre-authenticated SSIDs correspond to the one or more BSSIDs, wherein the SSID-BSSID database correlates the one or more pre-authenticated SSIDs for the one or more BSSIDs.

4. The method as claimed in claim 1 further comprising:
storing, by the Wi-Fi client (100), one or more pre-authenticated SSIDs corresponding to the one or more BSSIDs in an SSID-BSSID database.

5. The method as claimed in claim 1, wherein associating the one or more SSIDs with the one or more BSSIDs for the one or more portable UEs comprising:
associating the one or more portable UEs with a first access point in a wireless network using a uniquely assigned BSSID among a plurality of stored uniquely assigned BSSIDs assigned to a plurality of UEs.

6. A Wi-Fi client (100) associated with one or more SSIDs (Service Set Identifiers), the Wi-Fi client (100) **characterized in that**:
a controller (102) to control embedded features present in the Wi-Fi client (100) and assist in connecting one or more portable UEs (User Equipments) with an operator's broadband services or any other Wi-Fi broadband services; and
a transmitter (104) instructively coupled with the controller (102), wherein the transmitter (104) is configured to send instructions to the one or more portable UEs to automatically enable Wi-Fi on the one or more portable UEs when Wi-Fi is disabled on the one or more portable UEs and when the portable UE associated with Wi-Fi client 100 is pre-authenticated with the one or more SSIDs, thereby enabling latching of the one or more portable UEs to the one or more SSIDs.

7. The Wi-Fi client (100) as claimed in claim 6 further comprising a scanner (106) configured to scan for available one or more SSIDs even when Wi-Fi is disabled on the one or more portable UEs associated with the Wi-Fi client (100).

8. The Wi-Fi client (100) as claimed in claim 6, wherein the controller (102) comprises an authenticator (110), wherein the authenticator (110) identifies one or more pre-authenticated SSIDs of available one or more SSIDs based on an SSID-BSSID database, wherein the one or more pre-authenticated SSIDs correspond to the one or more BSSIDs.

9. The Wi-Fi client (100) as claimed in claim 8, wherein the SSID-BSSID database correlates the one or more pre-authenticated SSIDs for the one or more BSSIDs.

10. The Wi-Fi client (100) as claimed in claim 6, further comprising a memory (108) configured to store one or more pre-authenticated SSIDs corresponding to the one or more BSSIDs in an SSID-BSSID database.

11. The Wi-Fi client (100) as claimed in claim 6 further comprising a list of SSIDs that are available in a vicinity of the one or more portable UEs.

12. The Wi-Fi client (100) as claimed in claim 6, wherein information related to the list of SSIDs is received in response to a request made by the one or more portable UEs, which contains their location and capability like types of supported interfaces.

13. The Wi-Fi client (100) as claimed in claim 6, wherein the Wi-Fi client (100) is configured to to provide network discovery and selection assistance by data management and control features.

14. The Wi-Fi client (100) as claimed in claim 6, wherein the Wi-Fi client (100) responds to the one or more portable UEs' requests for access network discovery information.

15. The Wi-Fi client (100) as claimed in claim 6, wherein the Wi-Fi client (100) is able to initiate offload and facilitate data transfer to the one or more portable UEs based on network triggers or because of previous communication with the one or more portable UEs.
